# EUROPÄISCHE PATENTSCHRIFT

(11) **EP 2 121 399 B1**
(45) Veröffentlichungstag und Bekanntmachung des Hinweises auf die Patenterteilung: **18.08.2010**
(21) Anmeldenummer: 08715774.9
(22) Anmeldetag: 14.02.2008
(51) Int. Cl.: B60T 13/567, F16B 21/08, F16L 37/14

(54) **WEGBEGRENZUNGSORGAN IN EINER BREMSKRAFTVERSTÄRKUNGSEINRICHTUNG UND BREMSKRAFTVERSTÄRKUNGSEINRICHTUNG**
TRAVEL LIMITING ELEMENT IN A BRAKE SERVO DEVICE AND BRAKE SERVO DEVICE
ORGANE DE LIMITATION DE COURSE DANS UN DISPOSITIF D'AMPLIFICATION DE FORCE DE FREINAGE ET DISPOSITIF D'AMPLIFICATION DE FORCE DE FREINAGE

(30) Priorität: 19.03.2007 DE 102007013074
(43) Veröffentlichungstag der Anmeldung: 25.11.2009
(73) Patentinhaber: Lucas Automotive GmbH, 56070 Koblenz (DE)
(72) Erfinder: MALLMANN, Markus, 56291 Pfalzfeld (DE); POSSMANN, Michael, 56112 Lahnstein (DE)
(74) Vertreter: Thum, Bernhard
(86) Internationale Anmeldenummer: PCT/EP2008/001140
(87) Internationale Veröffentlichungsnummer: WO 2008/113440

(56) Entgegenhaltungen:
- DE-A1- 3 210 125
- GB-A- 2 296 548
- US-A1- 2003 052 533

## Beschreibung

Die vorliegende Erfindung betrifft ein Wegbegrenzungsorgan für eine Bremskraftverstärkungseinrichtung für eine Kraftfahrzeugbremsanlage, mit einem Längsschenkelpaar, das über wenigstens einen Querschenkel miteinander verbunden ist, wobei das Wegbegrenzungsorgan in Anlage mit einem Anschlag der Bremskraftverstärkungseinrichtung bringbar ist.

Derartige Wegbegrenzungsorgane, im Fachjargon auch "Querriegel" genannt, sind bereits aus dem Stand der Technik bekannt. So zeigt das Dokument EP 0 327 997 A2 einen pneumatischen Bremskraftverstärker in Tandembauweise, bei dem die Übertragungskolbenanordnung mit einem Querriegel ausgeführt ist. Dieser Querriegel steht in einer Ausgangsstellung des Bremskraftverstärkers in Anlage mit dem Verstärkergehäuse. Er ist in einem Durchbruch innerhalb des Steuerventilgehäuses zusammen mit der Steuerkolbenanordnung verschiebbar. Dadurch begrenzt er einerseits die Relativbewegung zwischen der Steuerkolbenanordnung und dem Steuerventilgehäuse und sorgt andererseits für eine definierte Ausgangsstellung, indem er sich an einem zugeordneten Anschlag an der Gehäusewand anlegt.

Die Funktionsweise derartiger Bremskraftverstärker und insbesondere die Funktion eines solchen als Querriegel bezeichneten Wegbegrenzungsorgans ist im Stand der Technik wohl bekannt.

Ferner ist zum Stand der Technik auch auf das Dokument DE 103 42 452 A1 zu verweisen, welches einen vergleichbaren Querriegel zeigt.

Es hat sich gezeigt, dass derartige Querriegel verhältnismäßig große Lasten tragen müssen, sodass sie aus einem entsprechend stabilen Material, insbesondere aus einem schweren zähfesten Metallwerkstoff, hergestellt sein müssen. Üblicherweise werden solche Querriegel in einem Stanzherstellungsprozess gefertigt. Da während des Betriebs, wie vorstehend geschildert, die Querriegel in und außer Anlage mit verschiedenen Anschlägen am Gehäuse des Bremskraftverstärkers sowie am Steuerventilgehäuse gelangen, kommt es bei rein metallischer Ausführung der Querriegel im Betrieb, d. h. bei einer Betätigung der Bremse, zu unerwünschten Geräuschen. Um derartige Geräusche zu unterbinden, hat man in der Vergangenheit versucht, die Querriegel oder die Anschläge mit entsprechend geräuschdämpfender Beschichtung zu versehen, was die Herstellung verkompliziert und verteuert hat.

Es ist dem gegenüber eine Aufgabe der vorliegenden Erfindung, ein Wegbegrenzungsorgan der eingangs bezeichneten Art bereitzustellen, das bei einfachem und kostengünstigem Aufbau dennoch eine hinreichende Stabilität zur Aufnahme der auftretenden Kräfte bietet.

Diese Aufgabe wird durch ein Wegbegrenzungsorgan der eingangs bezeichneten Art gelöst, bei dem vorgesehen ist, dass das Wegbegrenzungsorgan zwei formstabil ausgebildete Verstärkungsstreben aufweist, die entlang der Längsschenkel verlaufen, und dass der Querschenkel aus einem dämpfenden Material hergestellt ist, das die beiden Längsschenkel zumindest abschnittsweise umgibt.

Erfindungsgemäß wird das Wegbegrenzungsorgan demnach so konzipiert, dass die lasttragende Abschnitte durch die Verstärkungsstreben verstärkt sind, dass diese aber bereits so in den Querschenkel eingebettet sind, dass eine hinreichende Formstabilität des Wegbegrenzungsorgans erreicht wird, wobei dieses gleichzeitig leichter und in den relevanten Bereichen geräuschdämpfend ausgebildet ist.

Die Verstärkungsstreben können je nach Bedarf ausgelegt sein. So ist es möglich, die Verstärkungsstreben mit unterschiedlicher Materialstärke auszuführen. Der besondere Vorteil der Verwendung von geradlinigen Verstärkungsstreben besteht darin, dass - anders als beim Stand der Technik - keine besondere Formgebung durch Stanzen oder Umformen erforderlich ist. Stattdessen können gemäß einer Weiterbildung der Erfindung Verstärkungsstreben aus Metall, insbesondere aus gezogenen Längsstahl oder Drahtmaterial, eingesetzt werden, wobei an die Oberflächengüte des Materials keine besonderen Anforderungen gestellt werden müssen. Alternativ hierzu kann vorgesehen sein, dass die Verstärkungsstreben aus Kunststoff, insbesondere aus zähfestem oder faserverstärktem oder körperverstärktem Kunststoff bestehen. So ist es möglich, das Wegbegrenzungsorgan aus hinreichen zähem Kunststoffmaterial herzustellen und gegenüber herkömmlichen metallischen Wegbegrenzungsorganen gemäß dem Stand der Technik eine erhebliche Gewichtseinsparung zu erzielen. Ferner kann erfindungsgemäß vorgesehen sein, dass das dämpfende Material von einem teilelastischen oder gummielastischen Kunststoffmaterial gebildet ist. Insbesondere ist bei der Auswahl des dämpfenden Materials darauf zu achten, dass keine unerwünschten Geräusche infolge der Anschlagwirkung entstehen. Gemäß einer Ausführungsvariante kann vorgesehen sein, dass das dämpfende Material faserverstärkt oder körperverstärkt ist. Dadurch wird die Stabilität des erfindungsgemäßen Wegbegrenzungsorgans weiter erhöht. Auch kann dessen Zähigkeit durch Zugabe geeigneter chemischer Additive gesteigert werden.

Gemäß einer vorteilhaften Ausführungsform der Erfindung ist vorgesehen, dass die Verstärkungsstreben vollständig in das dämpfende Material eingebettet sind. In diesem Zusammenhang ist wiederum auf den hinsichtlich der Herstellungskosten relevanten Vorteil der geringen Anforderungen an die Oberflächengüte der Verstärkungsstreben hinzuweisen. Durch das vollständige Einbetten der Verstärkungsstreben in das dämpfende Material lassen sich auch Verstärkungsstreben aus kostengünstigem Längsstahl, beispielsweise mit einem Vierkantprofil, verwenden die eine unbehandelte Oberfläche haben und damit besonders kostengünstig in der Anschaffung sind.

Ein weiterer Vorteil der "gebauten" Ausführung des erfindungsgemäßen Wegbegrenzungselements liegt darin, dass sich in den Querschenkel, der aus dem gummielastischen Kunststoffmaterial, beispielsweise durch Spritzgießen oder dergleichen, hergestellt werden kann, eine Komponente eines Wegsensors, insbesondere ein Magnet eines Hall-Sensors einbetten lässt. Bei dieser Erfindungsvariante kann die Wegsensorkomponente raumsparend und zugleich geschützt in vorteilhafterweise mit der Übertragungskolbeneinrichtung gekoppelt werden, sodass jegliche Bewegung der Übertragungskolbeneinrichtung und damit des Krafteingangsglieds erfassbar ist. Zusätzliche Magnethalterungen oder dergleichen, wie sie der Fachmann aus dem Stand der Technik kennt, können somit vermieden werden, was die Herstellung sowie den Aufbau des Bremskraftverstärkers weiter vereinfacht.

Üblicherweise wird bei der Montage das Wegbegrenzungsorgan von oben in einen Durchbruch im Steuerventilgehäuse eingeschoben. Um diesen Vorgang zu vereinfachen und die Montageposition des erfindungsgemäßen Wegbegrenzungsorgans eindeutig zu definieren, sieht eine Weiterbildung der Erfindung vor, dass an oder nahe dem Querschenkel wenigstens eine

Anschlagformation und dass an den Längsschenkeln wenigstens eine Rastzahnformation vorgesehen ist. Die Anschlagformation dient dazu, das Wegbegrenzungsorgan quer zur Längsrichtung der Bremskraftverstärkungseinrichtung in definierter Lage zu positionieren. In dieser definierten Lage verrastet die wenigstens eine Rastzahnformation dann mit einer entsprechenden Gegenrastzahnformation, beispielsweise am Steuerventilgehäuse, sodass ein unbeabsichtigtes Lösen des Wegbegrenzungsorgans ausgeschlossen wird. In diesem Zusammenhang ist bevorzugt vorgesehen, dass die Anschlagformation und/oder die Rastzahnformation aus dem dämpfenden Material hergestellt und an dem Querschenkel sowie an den Längsschenkeln angeformt sind. Auch hierdurch lässt sich die Herstellung des erfindungsgemäßen Wegbegrenzungsorgans vereinfachen, da Anschlagformation und/oder Rastzahnformation nachträglich durch Anformen an den Verbindungsstreben ausgebildet werden kann. Beim Stand der Technik werden entsprechende Formationen von durch den Stanzvorgang oder durch Umformvorgänge erhaltenen Materialabschnitten gebildet.

Die Erfindung betrifft ferner eine Bremskraftverstärkungseinrichtung für eine Kraftfahrzeugbremsanlage mit einem Wegbegrenzungsorgan der vorstehend beschriebenen Art.

Im Folgenden wird ein Ausführungsbeispiel der Erfindung anhand der beiliegenden Figuren erläutert. Es stellen dar:
- Fig. 1: eine Teillängsschnittansicht eines Steuerventilgehäuses sowie dieses umgebender Komponenten einer Bremskraftverstärkungseinrichtung gemäß der vorliegenden Erfindung;
- Fig. 2: eine Querschnittansicht der Anordnung gemäß Fig. 1 im Bereich des Wegbegrenzungsorgans und
- Fig. 3: eine perspektivische Einzelteildarstellung des erfindungsgemäßen Wegbegrenzungsorgans.

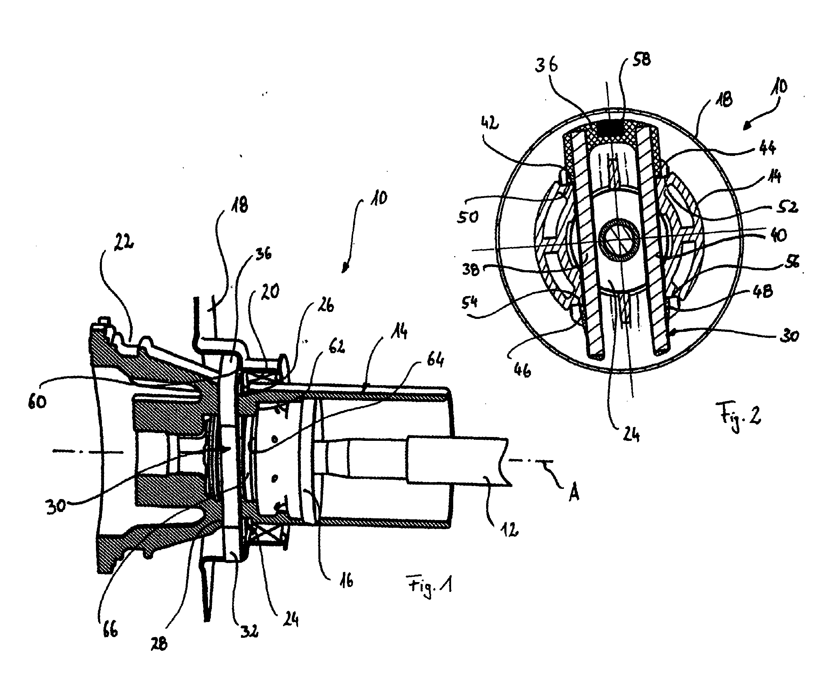

In Fig. 1 ist ein Teil einer erfindungsgemäßen Bremskraftverstärkungseinrichtung im Teillängsschnitt dargestellt und allgemein mit 10 bezeichnet. Diese umfasst ein Krafteingangsglied 12, das an seiner in Fig. 1 abgeschnittenen Endseite mit einem Bremspedal in nicht gezeigter Weise gekoppelt ist. Das Krafteingangsglied 12 ist in ein Steuerventilgehäuse 14 eingesetzt. Es ist zur gemeinsamen Bewegung mit einem Ventilelement 16 gekoppelt. Das Steuerventilgehäuse 14 ist in einem Verstärkergehäuse 18 aufgenommen und in diesem dichtend über eine Dichtung 20 entlang der Längsachse A verschiebbar geführt. Das Steuerventilgehäuse 14 ist in einem Bereich 22 mit einer nicht gezeigten beweglichen Wand in herkömmlicher Weise gekoppelt.

Ferner definiert das Steuerventilgehäuse 14 einen Durchbruch 24, der von zwei Anschlägen 26 und 28 (teilweise verdeckt) begrenzt wird. In Fig. 2 erkennt man, dass sich der Durchbruch 24 zentral durch das Steuerventilgehäuse 14 hindurch erstreckt.

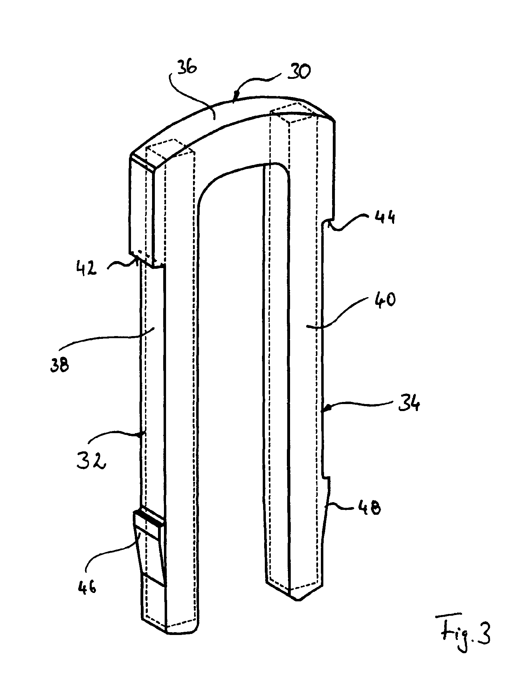

In dem Durchbruch 24 ist ein erfindungsgemäßes Wegbegrenzungsorgan 30 aufgenommen. Dieses ist etwa hufeisenförmig ausgebildet, sodass es, wie insbesondere in Fig. 2 und in Fig. 3 zu erkennen ist, zwei Längsschenkel 32 und 34 und einen diese verbindenden Querschenkel 36 aufweist. Das Wegbegrenzungsorgan 30 setzt sich zusammen aus zwei Verstärkungsstreben 38 und 4 0, die in Fig. 3 strichliert gezeichnet sind. Diese Verstärkungsstreben 38, 40 sind im gezeigten Ausführungsbeispiel in ein elastisches Gummimaterial eingebettet, welches zugleich den Querschenkel 36 bildet. Dieses elastische Gummimaterial umgibt die Verstärkungsstreben 38 und 40, die aus einem Vierkantstahl hergestellt sind, vollständig.

Das elastische Gummimaterial bildet im Bereich des Querschenkels 36 seitlich der Längsschenkel 32, 34 Anschlagschultern 42 und 44 aus. Im Bereich der freien Enden der Längsschenkel 32 und 34 sind endnah Rastzahnformationen 44 und 46 vorgesehen, die zu den freien Enden der Längsschenkel 32 und 34 abgeschrägt sind.

Ein solches Wegbegrenzungsorgan 30 ist, wie Figuren 1 und 2 zeigen, bei der Montage der erfindungsgemäßen Bremskraftverstärkungseinrichtung 10 auf das Steuerventilgehäuse 14 aufgeschoben, sodass die beiden Anschlagschultern 42 und 44 auf korrespondierenden Anschlagflächen 50 und 52 im oberen Bereich des Steuerventilgehäuses 14 an dem Durchbruch 24 anliegen. In diesem Zustand hintergreifen die Rastzahnformationen 46 und 48 korrespondierende Gegenrastflächen 54 und 56 am Steuerventilgehäuse 14.

In der Schnittansicht gemäß Fig. 2 erkennt man nochmals, dass die Verstärkungsstreben 38 und 40 vollständig in das Gummimaterial eingebettet sind, welches auch den Querschenkel 36 bildet. In den Querschenkel 36 ist ferner ein Magnet 58 eingebettet, der Teil eines Hall-Sensors zur Erfassung der augenblicklichen Position des Querschenkels 36 und von Relativbewegungen ist.

Wendet man sich nun nochmals Fig. 1 zu, so erkennt man, dass das Wegbegrenzungsorgan 30 in der in Fig. 1 gezeigten Ausgangsstellung sowohl mit seinem Querschenkel 36 als auch mit den freien Enden der Längsschenkel 32 und 34 in Anlage mit einem Anschlag 60 steht, der in Form einer Durchmesserschulter in dem Verstärkergehäuse 18 ausgebildet ist. Ferner erkennt man zwei Dichtsitze 62 sowie einen Teil eines Steuerkolbens 66.

Wie bereits ausgeführt, funktioniert der Bremskraftverstärker 10 wie ein herkömmlicher Bremskraftverstärker, d. h. so, wie bei dem eingangs genannten Stand der Technik bereits erwähnt. Wesentlich hierbei ist, dass sich in der in Fig. 1 gezeigten Ausgangsstellung das Wegbegrenzungsorgan 30 an den Anschlag 60 des Verstärkergehäuses 18 anlegt und so die Ausgangsstellung des Steuerventilgehäuses 14 relativ zum Verstärkergehäuse 18 festlegt. Darüber hinaus definiert es auch eine Relativbewegung zwischen dem Steuerventilgehäuse 14 und dem Steuerkolben 66 in herkömmlicher Weise, wobei je nach Betätigungsart die beiden Ventilsitze 62 und 64 geöffnet bzw. geschlossen werden.

Durch die erfindungsgemäße Gestaltung des Wegbegrenzungsorgans 30 lässt sich dieses einfach und mit geringem Kostenaufwand herstellen. Insbesondere bietet die Tatsache, dass die Funktionsflächen, wie etwa die Anschlagschultern 42 und 44 sowie die Rastzahnformationen 46 und 48 aus Kunststoffmaterial hergestellt sind, eine große Gestaltungsvielfalt unter geringem technischen Aufwand und geringem Kosteneinsatz. Auch die Tatsache, dass sich standardmäßig erhältliche Vierkantelemente als Verstärkungsstreben verwenden lassen, vereinfacht den Aufbau und die Herstellung. Die im Betrieb aktiven Anschlagflächen, insbesondere diejenigen Flächen, die mit der Anschlagstufe 60 am Verstärkergehäuse 18 sowie mit den Anschlägen 26 und 28 am Steuerventilgehäuse zusammenwirken, sind mit dämpfendem gummielastischen Material überzogen, sodass keine unerwünschten Geräusche entstehen.

## Patentansprüche

1. Wegbegrenzungsorgan (30) für eine Bremskraftverstärkungseinrichtung (10) für eine Kraftfahrzeugbremsanlage, mit einem Längsschenkelpaar (32, 34), das über wenigstens einen Querschenkel (36) miteinander verbunden ist, wobei das Wegbegrenzungsorgan (30) in Anlage mit einem Anschlag (60) der Bremskraftverstärkungseinrichtung bringbar ist,
**dadurch gekennzeichnet, dass** das Wegbegrenzungsorgan (30) zwei formstabil ausgebildete Verstärkungsstreben (38, 40) aufweist, die entlang der Längsschenkel (32, 34) verlaufen, und dass der Querschenkel (36) aus einem dämpfenden Material hergestellt ist, das die beiden Längsschenkel (32, 34) zumindest abschnittsweise umgibt.

2. Wegbegrenzungsorgan (30) nach Anspruch 1,
**dadurch gekennzeichnet, dass** die Verstärkungsstreben (32, 34) aus Metall, insbesondere aus gezogenem Längsstahl oder Drahtmaterial geringer Oberflächengüte bestehen.

3. Wegbegrenzungsorgan (30) nach Anspruch 1,
**dadurch gekennzeichnet, dass** die Verstärkungsstreben (32, 34) aus Kunststoff, insbesondere aus zähfestem oder faserverstärktem oder körperverstärktem Kunststoff bestehen.

4. Wegbegrenzungsorgan (30) nach einem der vorangehenden Ansprüche,
**dadurch gekennzeichnet, dass** das dämpfende Material von einem teilelastischen oder gummielastischen Kunststoffmaterial gebildet ist.

5. Wegbegrenzungsorgan (30) nach Anspruch 4,
**dadurch gekennzeichnet, dass** das dämpfende Material faserverstärkt ist.

6. Wegbegrenzungsorgan (30) nach einem der vorangehenden Ansprüche,
**dadurch gekennzeichnet, dass** die Verstärkungsstreben (32, 34) vollständig in das dämpfende Material eingebettet sind.

7. Wegbegrenzungsorgan (30) nach einem der vorangehenden Ansprüche,
**dadurch gekennzeichnet, dass** in dem Querschenkel (36) eine Komponente eines Wegsensors, insbesondere ein Magnet (58) eines Hall-Sensors, vorgesehen ist.

8. Wegbegrenzungsorgan (30) nach einem der vorangehenden Ansprüche,
**dadurch gekennzeichnet, dass** an oder nahe dem Querschenkel (36) wenigstens eine Anschlagformation (42, 44) und dass an den Längsschenkeln (32, 34) wenigstens eine Rastzahnformation (46, 48) vorgesehen ist.

9. Wegbegrenzungsorgan (30) nach Anspruch 8,
**dadurch gekennzeichnet, dass** die Anschlagformation (42, 44) und/oder die Rastzahnformation (46, 48) aus dem dämpfenden Material hergestellt und an dem Querschenkel (36) sowie an den Längsschenkeln (32, 34) angeformt ist.

10. Bremskraftverstärkungseinrichtung (10) für eine Kraftfahrzeugbremsanlage mit einem Wegbegrenzungsorgan (30) nach einem der vorangehenden Ansprüche.

## Claims

1. Travel limiting element (30) for a brake booster device (10) for a motor vehicle brake system, comprising a pair of longitudinal legs (32, 34) which are connected to one another via at least one transverse leg (36), wherein the travel limiting element (30) can be brought into contact with a stop (60) of the brake booster device, **characterised in that** the travel limiting element (30) comprises two dimensionally stable reinforcement braces (38, 40) which extend along the longitudinal legs (32, 34), and that the transverse leg (36) is made of a damping material which surrounds the two longitudinal legs (32, 34) at least in sections.

2. Travel limiting element (30) according to Claim 1,
**characterised in that** the reinforcement braces (32, 34) consist of metal, in particular of drawn longitudinal steel or wire material of a low surface quality.

3. Travel limiting element (30) according to Claim 1,
**characterised in that** the reinforcement braces (32, 34) consist of plastics material, in particular of tough or fibre-reinforced or body-reinforced plastics material.

4. Travel limiting element (30) according to one of the preceding claims,
**characterised in that** the damping material is constituted by a partially elastic or an elastomeric plastics material.

5. Travel limiting element (30) according to Claim 4,
**characterised in that** the damping material is fibre-reinforced.

6. Travel limiting element (30) according to one of the preceding claims,
**characterised in that** the reinforcement braces (32, 34) are completely embedded in the damping material.

7. Travel limiting element (30) according to one of the preceding claims,
**characterised in that** a component of a displacement sensor, in particular a magnet (58) of a Hall sensor, is provided in the transverse leg (36).

8. Travel limiting element (30) according to one of the preceding claims,
**characterised in that** at least one stop formation (42, 44) is provided on or near the transverse leg (36), and that at least one locking tooth formation (46, 48) is provided on the longitudinal legs (32, 34).

9. Travel limiting element (30) according to Claim 8,
**characterised in that** the stop formation (42, 44) and/or the locking tooth formation (46, 48) are/is made of the damping material and moulded onto the transverse leg (36) as well as onto the longitudinal legs (32, 34).

10. Brake booster device (10) for a motor vehicle brake system comprising a travel limiting element (30) according to one of the preceding claims.

## Revendications

1. Organe de limitation de course (30) pour un dispositif d'amplification de force de freinage (10) pour un système de freinage d'automobile, comprenant une paire de bras longitudinaux (32, 24) reliés l'un à l'autre par le biais d'au moins un bras transversal (36), ledit organe de limitation de course (30) pouvant être amené contre une butée (60) du dispositif d'amplification de force de freinage,
**caractérisé en ce que** l'organe de limitation de course (30) présente deux barres de renforcement (38, 40) indéformables qui s'étendent le long des bras longitudinaux (32, 34), et **en ce que** le bras transversal (36) est constitué d'un matériau amortissant qui entoure au moins sur certaines parties les deux bras longitudinaux (32, 34).

2. Organe de limitation de course (30) selon la revendication 1,
**caractérisé en ce que** les barres de renforcement (32, 34) sont constituées de métal, plus particulièrement d'acier longitudinal étiré ou d'un matériau sous forme de fil de faible qualité de surface.

3. Organe de limitation de course (30) selon la revendication 1,
**caractérisé en ce que** les barres de renforcement (32, 34) sont constituées de matière synthétique, plus particulièrement de matière synthétique de haute résistance ou renforcée de fibres ou renforcée de l'intérieur.

4. Organe de limitation de course (30) selon l'une des revendications précédentes, **caractérisé en ce que** le matériau amortissant est constitué d'une matière synthétique en partie élastique ou ayant l'élasticité du caoutchouc.

5. Organe de limitation de course (30) selon la revendication 4,
**caractérisé en ce que** le matériau amortissant est renforcé par des fibres.

6. Organe de limitation de course (30) selon l'une des revendications précédentes, **caractérisé en ce que** les barres de renforcement (32, 34) sont complètement noyées dans le matériau amortissant.

7. Organe de limitation de course (30) selon l'une des revendications précédentes,
**caractérisé en ce qu'**un composant de capteur de course, plus particulièrement un aimant (58) de capteur à effet Hall, est prévu dans le bras transversal (36).

8. Organe de limitation de course (30) selon l'une des revendications précédentes, **caractérisé en ce que** sont prévus au moins un élément formant butée (42, 44) sur le bras transversal (36) ou à proximité de celui-ci, et au moins un élément formant dent d'accrochage (46, 48) sur les bras longitudinaux (32, 34).

9. Organe de limitation de course (30) selon la revendication 8,
**caractérisé en ce que** l'élément formant butée (42, 44) et/ou l'élément formant dent d'accrochage (46, 48) sont constitués d'un matériau amortissant et sont formés sur le bras transversal (36) et sur les bras longitudinaux (32, 34).

10. Dispositif d'amplification de force de freinage (10) pour un système de freinage d'automobile, équipé d'un organe de limitation de course (30) selon l'une des revendications précédentes.
